(19) Europäisches Patentamt / European Patent Office / Office européen des brevets

(11) **EP 1 659 373 B1**

(12) **EUROPEAN PATENT SPECIFICATION**

(45) Date of publication and mention
of the grant of the patent:
**06.06.2007 Bulletin 2007/23**

(51) Int Cl.:
**G01D 5/347** (2006.01)  **G01B 5/00** (2006.01)

(21) Application number: **04380233.9**

(22) Date of filing: **23.11.2004**

(54) **Linear encoder with temperature compensation**

Linearpositionsgeber mit Temperaturkompensation

Capteur de position linéaire avec compensation de température

(84) Designated Contracting States:
**AT BE BG CH CY CZ DE DK EE ES FI FR GB GR HU IE IS IT LI LU MC NL PL PT RO SE SI SK TR**

(43) Date of publication of application:
**24.05.2006 Bulletin 2006/21**

(73) Proprietor: **FAGOR, S.Coop**
**20500 Mondragon (Guipuzcoa) (ES)**

(72) Inventors:
• **Alejandre, Ignacio**
**20500 Mondragon (Gipuzkoa) (ES)**

• **Zunzunegui, Jose Javier**
**20550 Aretxabeleta (Giupuzkoa) (ES)**
• **Urra, Juan Carlos**
**20500 Mondragon (Gipuzkoa) (ES)**

(74) Representative: **Fernandez Guzman, Juan**
**Apartado 213 (Dpto. Propiedad Industrial)**
**20500 Mondragon (Gipuzkoa) (ES)**

(56) References cited:
**US-A- 4 815 213**      **US-A- 5 182 867**

**Description**

TECHNICAL FIELD

The present invention relates to optical measuring devices of linear and angular displacements and, more specifically, to optical measuring devices that comprise a graduated scale with at least two tracks, an incremental track and an absolute track, and a detection unit with means for measuring a relative position and means for measuring an absolute position.

PRIOR ART

Optical measuring devices that comprise a graduated scale with an incremental track and an absolute track, and a detection unit with means for measuring a relative position and means for measuring an absolute position are already known.

US 5,235,181 A discloses an optical measuring device of these characteristics. The detection unit described comprises, for measuring the relative position, a first photoemitter, a sensing graticule and photodetector means, and also comprises, for measuring the absolute position, a second photoemitter and a CCD-type linear sensor of photodetectors. The means for measuring the relative position and the means for measuring the absolute position are separated spatially in the direction of the relative displacement of the detection unit in relation to the graduated scale.

Measuring devices in which the graduated scale is attached to a protective profile which is in turn attached to a first fixed object, for example, a bed, and in which the detection unit comprises a positioning module that incorporates the means for measuring the relative and absolute position, with said positioning module being attached to an attachment support which is in turn attached to a second object, for example, a slide that is displaced in relation to a bed, are already known. Optical measuring devices in which the sensing graticule and the linear sensor of photodetectors arranged in a support piece that is attached by adhesive means to the positioning module are also already known.

A problem that these types of optical measuring devices may have is that errors in the measuring occur when the temperature changes. This is due to the fact that as the thermal expansion coefficient of the graduated scale and the thermal expansion coefficient of the support piece are usually different, there is no correspondence between the expansion suffered by the graduated scale and the modification of the separation between the sensing graticule and the linear sensor of photodetectors due to the expansion of the support piece.

There are other types of measuring systems in which attempts have been made to solve the problem deriving from the expansion. Thus, for example, DE 199 19 042 A1 discloses a measuring system that comprises a scale with a first thermal expansion coefficient and a sensor head that comprises two sensor units separated from each other and arranged on a support with a second thermal expansion coefficient. The measuring system also comprises an evaluation unit that obtains the temperature from the relative movement of the scale in relation to the two sensor units and compensates the results measured by taking into consideration the effects of thermal expansion at said temperature.

US 5,182,867 A discloses a measuring device for assessing the relative position between a first object and a second object, which comprises a probing unit attached to the first object and a scale attached to a support piece fixed to the second object. Irregularities in measuring deriving from the difference between the thermal expansion coefficient of the second object and the thermal expansion coefficient of the support piece are avoided by adding an auxiliary support piece with a thermal expansion coefficient different to that of the support piece. The thermal expansion coefficients, the moduli of elasticity and the cross sections of the support piece and the auxiliary support piece are selected in such a way that the thermal expansion coefficient resulting from the structural combination of said support piece and said auxiliary support piece is substantially the same as the thermal expansion coefficient of the second object.

US 4,815,213 A discloses a coordinate measuring machine with a linear position detector which is temperature compensated. The linear position detector encompasses an encoder and a scale. The objective of the invention of US 4,815,213 A is to avoid the relative shift in position of the encoder with regard to the scale due to thermal expansion. In order to do so, the encoder mount comprises a column, preferably formed from an invar alloy, with a length that is calculated so that the vertical shift of the encoder and the scale due to thermal expansion is the same.

DISCLOSURE OF THE INVENTION

The object of the invention is to provide an optical measuring device that minimises errors deriving from thermal expansion.

The optical measuring device of the invention is of the type that comprises a graduated scale with an incremental track and an absolute track, and a detection unit that comprises means for measuring a relative position and means for measuring an absolute position. The means for measuring a relative position comprise a first photoemitter, a sensing graticule and photodetector means, and the means for measuring an absolute position comprise a second photoemitter and a linear sensor of photodetectors.

The means for measuring a relative position and the means for measuring an absolute position are separated spatially in the direction of the relative displacement of the detection unit in relation to the graduated scale, and the detection unit comprises a positioning module that comprises a support piece in which the sensing graticule and the linear sensor of photodetectors are arranged. The support piece is attached onto the positioning module by adhesive means.

The support piece is of a different material to that of the graduated scale, and the physical characteristics of the support piece, the adhesive means and the positioning module are such that the equivalent thermal expansion coefficient of the support piece is substantially the same as the thermal expansion coefficient of the graduated scale.

It is important that a different material is used for the support piece to that used for the graduated scale. In principle it may appear that the immediate solution to maintain correspondence between the expansion of the graduated scale and the separation between the sensing graticule and the positioning module is the use of the same material for the graduated scale and the support piece, which would mean that the thermal expansion coefficients would also be the same. However, the modulus of elasticity of the glass used for the graduated scales is not sufficiently high, which means that the support piece would easily become deformed as a consequence of the expansion of the positioning module. It is possible to try and minimise the effect of the expansion of the positioning module but the thickness of the support piece would have to be increased considerably.

In the optical measuring device of the invention, the effect of the positioning module on the support piece is not considered to be a negative effect that has to be minimised, but is integrated as another factor to be taken into consideration so that the set formed by the positioning module, support piece and the adhesive means has the characteristics that make the equivalent thermal expansion coefficient of the support piece substantially the same as the thermal expansion coefficient of the graduated scale.

Furthermore, in the optical measuring device of the invention the effects of the thermal expansion are minimised without having to add additional elements.

These and other advantages and characteristics of the invention will be made evident in the light of the drawings and the detailed description thereof.

DESCRIPTION OF THE DRAWINGS

FIGURE 1 is a perspective view of an optical measuring device.

FIGURE 2 is a schematic view in perspective of the graduated scale and part of the detection unit of the optical measuring device of FIGURE 1.

FIGURE 3 is a cross section of the graduated scale, the support piece, the sensing graticule and the linear sensor of photodetectors of the optical measuring device of FIGURE 1.

FIGURE 4 is a perspective view of the graduated scale, the sensing graticule and the linear sensor of photodetectors of the optical measuring device of FIGURE 1.

FIGURE 5 is a perspective view of part of the optical measuring device of FIGURE 1 in which the adhesive means fixing the support piece to the positioning module can be seen.

FIGURE 6 is a first schematic view in perspective in which the positioning module, the adhesive means and the support piece of the optical measuring device of the invention are shown.

FIGURE 7 is a second schematic view in perspective in which the positioning module, the adhesive means and the support piece of the optical measuring device of the invention are shown.

FIGURE 8 is a schematic view in perspective of the positioning module, the adhesive means and the support piece in a first situation in which there is no expansion and in a second situation in which there is expansion.

FIGURE 9 is a schematic view in perspective of the adhesive means and the forces that the positioning module and the support piece exert on said adhesive means.

FIGURE 10 is a profile view of the adhesive means in FIGURE 9.

DETAILED DESCRIPTION OF THE INVENTION

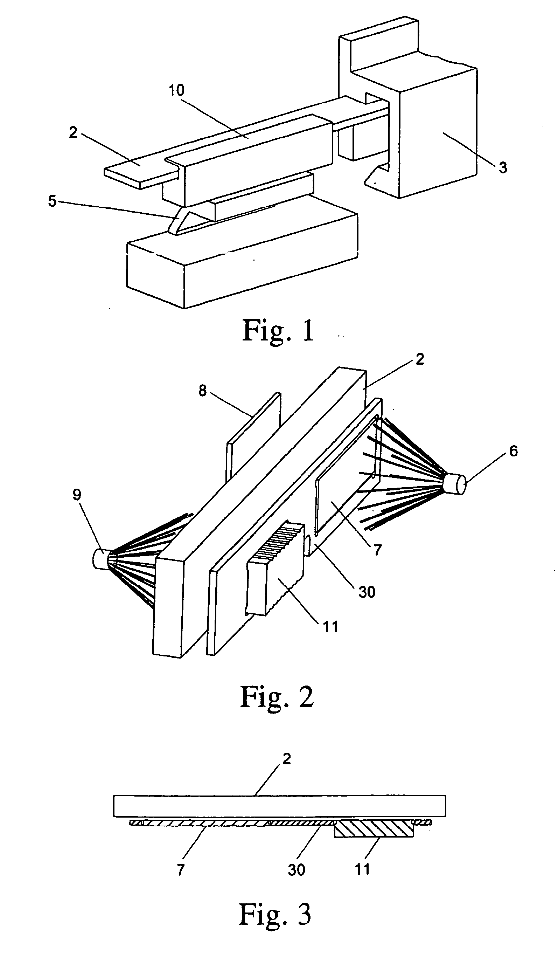

With reference to figures 1 to 5, the optical measuring device 1 of the invention is of the type that comprises a glass graduated scale 2 with an incremental track and an absolute track, and a detection unit. The detection unit comprises means for measuring a relative position which comprise a first photoemitter 6, a sensing graticule 7 and photodetector means 8, and means for measuring an absolute position which comprise a second photoemitter 9 and a CCD-type linear sensor of photodetectors 11.

With reference to figure 1, the device 1 measures linear displacements and in the embodiment shown the graduated scale 2 is attached to a protective profile 3 that is itself attached to a first fixed object (not shown in the figures), for example, a bed. The detection unit comprises a positioning module 10 that incorporates the means for measuring the relative and absolute position. The positioning module 10 is attached to an attachment support 5 which is in turn attached to a second object (not shown in the figures), for example, a slide that is displaced in relation to a bed.

With reference to figure 2, the means for measuring the relative position and the means for measuring the absolute position are separated spatially in the direction of the relative displacement of the detection unit in relation to the graduated scale 2. The detection unit comprises a positioning module 10 that comprises a support piece 30 in which the sensing graticule 7 and the linear sensor of photodetectors 11 are arranged. The support piece 30 is attached to the positioning module 10 by adhesive means 20.

The support piece 30 is of a different material to that of the graduated scale 2, and the physical characteristics of the support piece 30, the adhesive means 20 and the positioning module 10 are such that the equivalent thermal expansion coefficient $\alpha_{30e}$ of the support piece 30 is substantially the same as the thermal expansion coefficient $\alpha_2$ of the graduated scale 2. Logically, the thermal expansion coefficient $\alpha_2$ to be considered will be the thermal expansion coefficient that the graduated scale 2 has when it is attached to the protective profile 3, as the thermal expansion coefficient of the free graduated scale 2 may be different to that of said graduated scale 2 when it is attached to said protective profile 3.

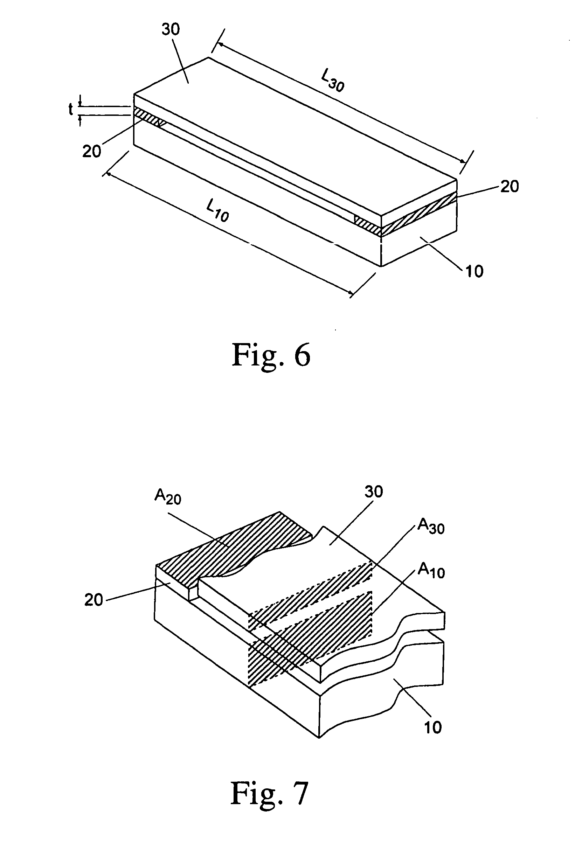

Consider the set formed by the positioning module 10, the adhesive means 20 and the support piece 30, represented in schematic mode in figures 6 and 7. The positioning module 10 has a cross section $A_{10}$, a length $L_{10}$, a modulus of elasticity $E_{10}$ and a thermal expansion coefficient $\alpha_{10}$. The adhesive means 20 have a longitudinal section $A_{20}$, a thickness t, a modulus of shearing $G_{20}$ and a thermal expansion coefficient $\alpha_{20}$. Finally, the support piece 30 has a cross section $A_{30}$, a length $L_{30}$, a modulus of elasticity $E_{30}$ and a thermal expansion coefficient $\alpha_{30}$.

In the embodiment of this example the adhesive means 20 are arranged on the ends of the support piece 30 although said adhesive means 20 can be arranged in another way, for example on the entire lower surface of the positioning module 10 or forming lateral strips around said positioning module 10.

In reference conditions for the assembly of device 1 of the invention, at a reference temperature $T_0$ (usually 20°C), when the positioning module 10 is attached to the support piece 30 the adhesive means 20 are free of stresses.

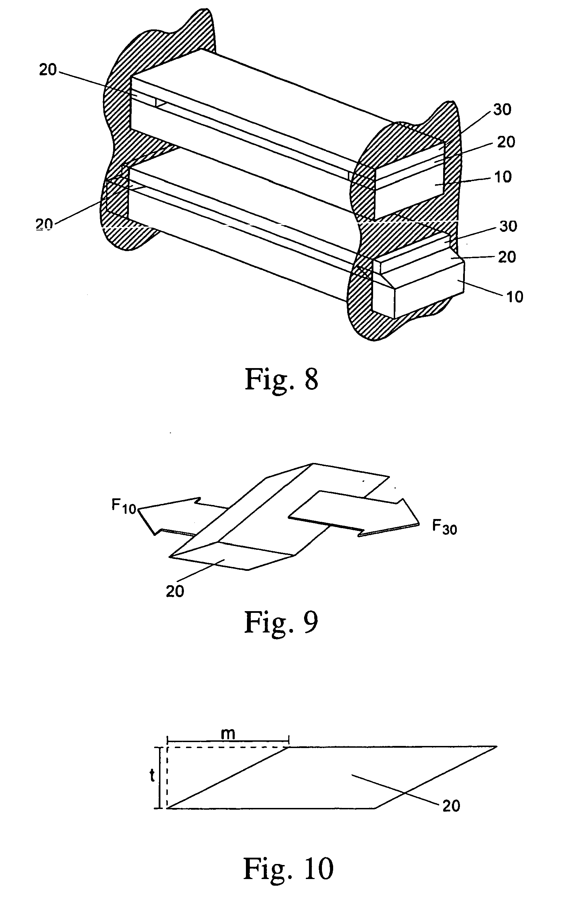

Suppose that an increase in temperature occurs and the temperature $T_0$ rises to another temperature $T_0+\Delta T$. As figure 8 shows, both the positioning module 10 and the support piece 30 increase in length. However, said increase in length is not free, but is influenced by the elements to which they are attached, which means that each material is not governed by its corresponding expansion coefficient but by a "conditioned" expansion coefficient.

Due to the variation in temperature, the adhesive means 20 are deformed as shown in figure 9. For a situation of equilibrium, where $F_{10}$ is the force that the positioning module 10 exerts on the adhesive means 20 and where $F_{30}$ is the force that the support piece 30 exerts on the adhesive means 20, it holds that:

$$F_{10} = -F_{30} \qquad (1)$$

In analysing the status of the positioning module 10, the following equation can be written:

$$\Delta L_{10} = L_{10} \cdot \alpha_{10} \cdot \Delta T + \frac{F_{10} \cdot L_{10}}{E_{10} \cdot A_{10}} \qquad (2)$$

Said equation combines the effects of the change of length caused by the increase in temperature and the change of length to which it is subjected due to the force acting on it (Hooke's Law).

Similarly, for the support piece 30 it can be said that:

$$\Delta L_{30} = L_{30} \cdot \alpha_{30} \cdot \Delta T + \frac{F_{30} \cdot L_{30}}{E_{30} \cdot A_{30}} \qquad (3)$$

In taking into consideration the state of deformation caused by the shearing that occurs in the adhesive means 20 and which is represented in figure 10, in using Hooke's Law regarding shearing stresses it can be said that:

$$\frac{F_{30}}{A_{20}} = G_{20} \cdot arctg \frac{\frac{\left(L_{10} + \Delta L_{10}\right) - \left(L_{30} + \Delta L_{30}\right)}{2}}{t} \qquad (4)$$

The expression that appears in the numerator on the right of the equation corresponds to the value m which is indicated in figure 10.

Taking into consideration that the following values are known:

$A_{10}$    Cross section of the positioning module 10
$L_{10}$    Length of the positioning module 10
$E_{10}$    Modulus of elasticity of the positioning module 10
$\alpha_{10}$    Expansion coefficient of the positioning module 10
$A_{20}$    Longitudinal section of the adhesive means 20
$t$    Thickness of the adhesive means 20
$G_{20}$    Modulus of shearing of the adhesive means 20
$\alpha_{20}$    Expansion coefficient of the adhesive means 20
$A_{30}$    Cross section of the support piece 30
$L_{30}$    Length of the support piece 30
$E_{30}$    Modulus of elasticity of the support piece 30
$\alpha_{30}$    Expansion coefficient of the support piece 30
$\Delta T$    Variation of temperature

the following variables remain unknown:

$\Delta L_{10}$    Variation of the length of the positioning module 10
$\Delta L_{30}$    Variation of the length of the support piece 30
$F_{10}$    Force exerted on the positioning module 10
$F_{30}$    Force exerted on the support piece 30

Given that there are four equations and four unknown variables, the system is determined, as a result of which the values of the unknown variables can be obtained.

Equivalent expansion coefficients can be obtained from the following expressions:

$$\Delta L_{10} = L_{10} \cdot \alpha_{10e} \cdot \Delta T \qquad (5)$$

$$\Delta L_{30} = L_{30} \cdot \alpha_{30e} \cdot \Delta T \qquad (6)$$

Thus, in selecting suitable values for the variables considered, the equivalent thermal expansion coefficient $\alpha_{30e}$ of the support piece 30 can be made equal to the thermal expansion coefficient $\alpha_2$ of the graduated scale 2. It is noted that when selecting the values for the different variables there are a large number of different possibilities, and the materials and dimensions considered most suitable in each case can be selected (different material for the support piece 30 for example, modification of the dimensions of said support piece 30, of the thickness of the adhesive means, etcetera). This means that various modification strategies could be initiated giving rise to a wide variety of options.

It can be seen, therefore, that when implementing the solution the effect of the tractions or compressions exerted by the positioning module 10 and the support piece 30 is considered to be a component additional to the expansion or contraction caused by the change of temperature. In short, the variables affecting the expansion of the support piece 30 have been identified and a solution in which said variables are taken into consideration has been proposed. A specific solution for this embodiment of the invention is shown below. In said specific solution the following values are selected for the physical characteristics of the positioning module 10, the adhesive means 20 and the support piece 30:

| Positioning module 10 Reinforced ABS | | Adhesive means 20 Silicon type | | Support piece 30 Alumina ($Al_2O_3$) | |
|---|---|---|---|---|---|
| $A_{10}$ | $50 \cdot 10^{-6}$ [$m^2$] | $A_{20}$ | $13 \cdot 10^{-6}$ [$m^2$] | $A_{30}$ | $5 \cdot 10^{-6}$ [$m^2$] |
| $L_{10}$ | $46 \cdot 10^{-3}$ [m] | t | $0.6 \cdot 10^{-3}$ [m] | $L_{30}$ | $46 \cdot 10^{-3}$ [m] |
| $E_{10}$ | $14.5 \cdot 10^9$ [Pa] | $G_{20}$ | $300 \cdot 10^6$ [Pa] | $E_{30}$ | $303 \cdot 10^9$ [Pa] |
| $\alpha_{10}$ | $30 \cdot 10^{-6}$ [m/(mK)] | $\alpha_{20}$ | $67 \cdot 10^{-6}$ [m/(mK)] | $\alpha_{30}$ | $6.3 \cdot 10^{-6}$ [m/(mK)] |

In considering a difference of temperature of 10°C, the equations would be as follows:

$$F_{10} = -F_{30} \qquad (7)$$

$$\Delta L_{10} = 46 \cdot 10^{-3} \cdot 30 \cdot 10^{-6} \cdot 10 + \frac{F_1 \cdot 46 \cdot 10^{-3}}{14.5 \cdot 10^9 \cdot 50 \cdot 10^{-6}} \qquad (8)$$

$$\Delta L_{30} = 46 \cdot 10^{-3} \cdot 6.3 \cdot 10^{-6} \cdot 10 + \frac{F_3 \cdot 46 \cdot 10^{-3}}{303 \cdot 10^9 \cdot 5 \cdot 10^{-6}} \qquad (9)$$

$$\frac{F_{30}}{13 \cdot 10^{-6}} = 300 \cdot 10^6 \cdot arctg \frac{\frac{(46 \cdot 10^{-3} + \Delta L_{10}) - (46 \cdot 10^{-3} + \Delta L_{30})}{2}}{0.6 \cdot 10^{-6}} \qquad (10)$$

In solving the system of equations the following is obtained:

$$\Delta L_{10} = 12.1 \cdot 10^{-6} \text{ [m]} \qquad \Delta L_{30} = 3.7 \cdot 10^{-6} \text{ [m]}$$

$$F_{10} = -27.2 \text{ [N]} \qquad F_{30} = 27.2 \text{ [N]}$$

And based on these values the equivalent expansion coefficients $\alpha_{10e}$ and $\alpha_{30e}$ can be calculated using the following equations:

$$12.1 \cdot 10^{-6} = 46 \cdot 10^{-3} \cdot \alpha_{10e} \cdot 10 \qquad (11)$$

$$3.7 \cdot 10^{-6} = 46 \cdot 10^{-3} \cdot \alpha_{30e} \cdot 10 \qquad (12)$$

From these the following is obtained:

$$\alpha_{10e} = 26.2 \cdot 10\text{-}6 \ [m/(mK)] \quad \alpha_{30e} = 8.1 \cdot 10\text{-}6 \ [m/(mK)]$$

The value of the equivalent expansion coefficient $\alpha_{30e}$ of the support piece 30 is practically the same as that of the glass of the graduated scale 2, as intended. This has been achieved by appropriately selecting materials and their dimensions.

In the embodiment shown schematically in figure 6, the adhesive means 20 are arranged on the ends of the support piece 30 and said support means 20 have, on the two ends, the longitudinal section $A_{20}$, the thickness t, the modulus of shearing $G_{20}$, and the thermal expansion coefficient $\alpha_{20}$. However, in a second embodiment, different adhesives are used on each end. More specifically, a rigid adhesive is used on one end, i.e. an adhesive with a high modulus of shearing G, and a flexible adhesive is used on the other end, i.e. an adhesive with a low modulus of shearing G. The connection between the variables involved in this second embodiment can be obtained through calculations similar to those made for the first embodiment.

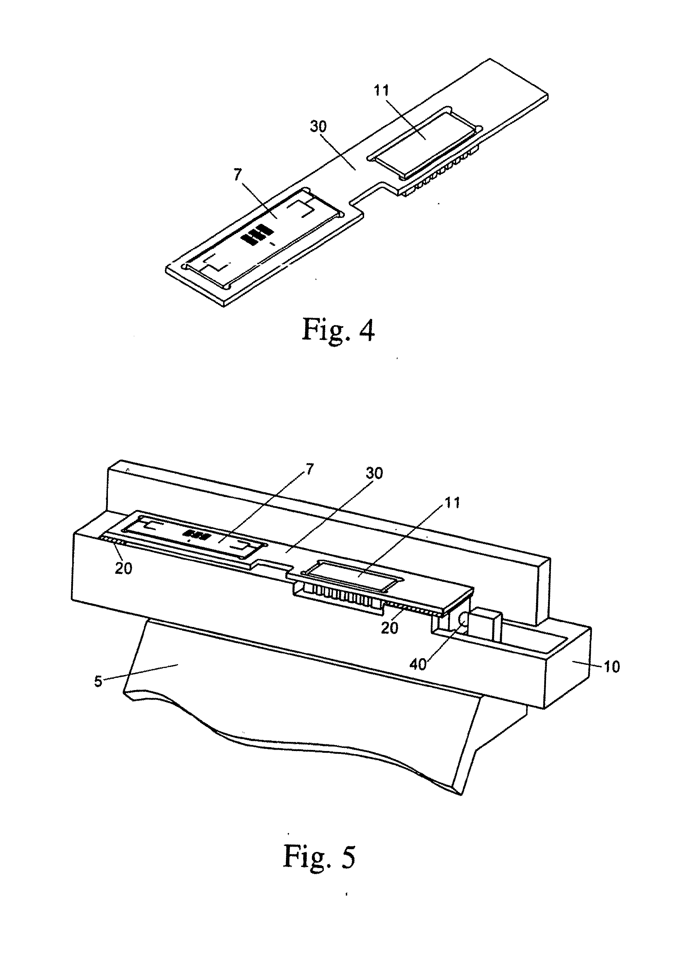

In this second embodiment, the adhesive means 20 on the end of the support piece 30 closest to the point 40 at which the movement produced by the relative displacement is transmitted to the positioning module 10 are rigid adhesive means, and the adhesive means 20 on the other end are flexible adhesive means. Said point 40, shown in figure 5, is a ball through which the second object (usually a slide attached to a bed) transmits the translation movement to the positioning module 10. As a result, the support piece 30 is attached to the positioning module 10 by a rigid point (that corresponding to the rigid adhesive) and a flexible point (that corresponding to the flexible adhesive). By positioning the rigid point close to the point 40, which is a fixed reference point, the effects deriving from the expansion of the positioning module 10 are minimised, as the further said rigid point is from the point 40, the further said rigid point will be displaced in relation to the point 40 for the same increase in temperature caused by the action of the expansion of the positioning module 10.

In a preferred embodiment, the support piece 30 has a high modulus of elasticity $E_{30}$ and a thermal expansion coefficient $\alpha_{30}$ smaller than the thermal expansion coefficient $\alpha_2$ of the graduated scale 2. This ensures that, in the event of an increase of temperature, the traction strains of the material of the positioning module 10, which will have a much higher thermal expansion coefficient $\alpha_{10}$, cause the support piece 30 to stretch in such a way that the equivalent expansion of said support piece 30 is the same as the expansion of the graduated scale 2. To ensure this occurs, the cross section $A_{30}$ of said support piece 30 is not arbitrary, but must be selected so that the effect of the set is the required one.

More specifically, in a preferred embodiment the support piece 30 is made of alumina, a material that effectively has a high modulus of elasticity $E_{30}$ and a thermal expansion coefficient $\alpha_{30}$ smaller than the thermal expansion coefficient $\alpha_2$ of the graduated scale 2.

As can be seen in figures 2 to 5, in the embodiment shown the support piece 30 comprises a first cavity in which the CCD-type linear sensor of photodetectors 11 is housed and a second cavity in which the sensing graticule 7 is housed. Said linear sensor of photodetectors 11 and said sensing graticule 7 are rigidly attached to the support piece 30.

It is also possible that the sensing graticule 7, instead of being housed in a cavity formed in the support piece 30, is etched on the support piece 30 itself.

Although the invention refers in particular to optical measuring devices with a graduated scale, an incremental track and an absolute track, and with a detection unit with the means for measuring a relative position and an absolute position, its scope also includes any type of measuring device in which it is necessary to maintain a correspondence between the variation of the separation between two sensor elements due to the action of the expansion, and the expansion of a graduated scale.

**Claims**

1. Optical measuring device that comprises

a graduated scale (2) with an incremental track and an absolute track, and
a detection unit that comprises

means for measuring a relative position that comprise a first photoemitter (6), a sensing graticule (7) and photodetector means (8), and
means for measuring an absolute position that comprise a second photoemitter (9) and a linear sensor of photodetectors (11),

said means for measuring a relative position and said means for measuring an absolute position being separated spatially in the direction of the relative displacement of the detection unit in relation to the graduated scale (2), and the detection unit comprising a positioning module (10) that comprises a support piece (30) in which the sensing graticule (7) and the linear sensor of photodetectors (11) are arranged, said support piece (30) being attached to the positioning module (10) by adhesive means (20),

**characterised in that** the support piece (30) is of a different material to that of the graduated scale (2) and the physical characteristics of the support piece (30), the adhesive means (20) and the positioning module (10) are such that the equivalent thermal expansion coefficient ($\alpha_{30e}$) of the support piece (30) is substantially the same as the thermal expansion coefficient ($\alpha_2$) of the graduated scale (2); wherein said physical characteristics are

the cross section ($A_{10}$), the length ($L_{10}$), the modulus of elasticity ($E_{10}$) and the thermal expansion coefficient ($\alpha_{10}$) of the positioning module (10),
the longitudinal section ($A_{20}$), the thickness (t), the modulus of shearing ($G_{20}$), and the thermal expansion coefficient ($\alpha_{20}$) of the adhesive means (20), and
the cross section ($A_{30}$), the length ($L_{30}$), the modulus of elasticity ($E_{30}$) and the thermal expansion coefficient ($\alpha_{30}$) of the support piece (30).

2. Optical measuring device according to claim 1, wherein the adhesive means (20) are arranged on the ends of the support piece (30).

3. Optical measuring device according to claim 2, wherein the adhesive means (20) on the end of the support piece (30) closest to the point (40) at which the movement produced by the relative displacement is transmitted to the positioning module (10) are rigid adhesive means.

4. Optical measuring device according to any of the preceding claims, wherein the support piece (30) has a high modulus of elasticity ($E_{30}$) and a thermal expansion coefficient ($\alpha_{30}$) smaller than the thermal expansion coefficient ($\alpha_2$) of the graduated scale (2).

5. Optical measuring device according to claim 4, wherein the support piece (30) is made of alumina.

6. Optical measuring device according to any of the preceding claims, wherein the support piece (30) comprises a first cavity in which the linear sensor of photodetectors (11) is housed and a second cavity in which the sensing graticule (7) is housed.

7. Optical measuring device according to any of claims 1 to 5, wherein the support piece (30) comprises a cavity in which the linear sensor of photodetectors (11) is housed and the sensing graticule (7) is etched on the support piece (30) itself.

**Patentansprüche**

1. Optisches Messgerät, umfassend eine Messskala (2) mit einer inkrementellen Schiene und einer absoluten Schiene,

sowie eine Erkennungseinheit,

umfassend eine Vorrichtung zum Messen der relativen Position eines ersten Lichtemitters (6), ein Sensorraster (7) und eine Fotodetektorvorrichtung (8),

sowie eine Vorrichtung zum Messen einer absoluten Position, die einen zweiten Lichtemitter (9) und einen linearen Sensor der Fotodetektoren (11) umfasst,
wobei die Vorrichtungen zum Messen einer relativen Position und die Vorrichtungen zum Messen einer absoluten Position in Richtung der relativen Verschiebung der Erkennungseinheit in Bezug auf die Messskala (2) räumlich getrennt sind
und die Erkennungseinheit ein Positioniermodul (10) umfasst, welches ein Trägerteil (30) umfasst, im dem der Sensorraster (7) und der lineare Sensor der Fotodetektoren (11) angeordnet sind, wobei das Trägerteil (30) am Positioniermodul (10) mit Klebevorrichtungen (20) befestigt ist,
**dadurch gekennzeichnet, dass** das Trägerteil (30) aus einem anderen Material besteht als das der Messskala (2) und die physikalischen Merkmale des Trägerteils (30), der Klebevorrichtungen (20) und des Positioniermoduls (10) so sind, dass der äquivalente Wärmeausdehnungskoeffizient ($\alpha_{30e}$) des Trägerteils (30) im Wesentlichen der Gleiche ist, wie der Wärmeausdehnungskoeffizient ($\alpha_2$) der Messskala (2); wobei die physikalischen Merkmale sind wie folgt:

> das Querprofil ($A_{10}$), die Länge ($L_{10}$), das Elastizitätsmaß ($E_{10}$) und der Wärmeausdehnungskoeffizient ($\alpha_{10}$) des Positioniermoduls (10),
> das Längsprofil ($A_{20}$), die Stärke (t), das Schermaß ($G_{20}$) und der Wärmeausdehnungskoeffizient ($\alpha_{20}$) der Klebevorrichtungen (20), sowie
> das Querprofil ($A_{30}$), die Länge ($L_{30}$), das Elastizitätsmaß ($E_{30}$) und der Wärmeausdehnungskoeffizient ($\alpha_{30}$) des Trägerteils (30).

2. Optisches Messgerät nach Anspruch 1, wobei die Klebevorrichtungen (20) an den Enden des Trägerteils (30) angeordnet sind.

3. Optisches Messgerät nach Anspruch 2, wobei die Klebevorrichtungen (20) am Ende des Trägerteils (30), das am nächsten am Punkt (40) liegt, an dem die von den relativen Verschiebungen erzeugte Bewegung auf das Positionierungsmodul (10) übertragen wird, starre Klebevorrichtungen sind.

4. Optisches Messgerät nach einem der vorausgehenden Ansprüche, wobei das Trägerteil (30) ein hohes Elastizitätsmaß ($E_{30}$) und einen Wärmeausdehnungskoeffizient ($\alpha_{30}$) besitzt, der geringer ist als der Wärmeausdehnungskoeffizient ($\alpha_2$) der Messskala (2).

5. Optisches Messgerät nach Anspruch 4, wobei das Trägerteil (30) aus Tonerde gefertigt ist.

6. Optisches Messgerät nach einem der vorausgehenden Ansprüche, wobei das Trägerteil (30) einen ersten Hohlraum umfasst, in dem der lineare Sensor der Fotodetektoren (11) untergebracht ist, und einen zweiten Hohlraum, in dem das Sensorraster (7) untergebracht ist.

7. Optisches Messgerät nach einem der Ansprüche 1 bis 5, wobei das Trägerteil (30) einen Hohlraum umfasst, in dem der lineare Sensor der Fotodetektoren (11) untergebracht ist, und das Sensorraster (7) auf dem Trägerteil (30) selber eingeätzt ist.

**Revendications**

1. Dispositif de mesure optique qui est doté d'une échelle graduée (2) elle-même munie d'un codeur incrémentiel et d'un codeur absolu, et
un appareil de détection qui comprend

> un dispositif pour la mesure d'une position relative pourvu d'un premier photoémetteur (6), d'un écran de détection (7) et d'un dispositif photodétecteur (8) et
> d'un dispositif pour la mesure d'une position absolue qui comprend un second photoémetteur (9) et un capteur linéaire de photodétecteurs (11),
> ledit dispositif destiné à la mesure d'une position relative et le dispositif conçu pour la mesure d'une position absolue étant séparés dans l'espace dans la direction du déplacement relatif de l'appareil de détection par rapport à l'échelle graduée (2), et
> l'appareil de détection comprenant un module de positionnement (10) pourvu d'une pièce support (30) dans laquelle l'écran de détection (7) et le capteur linéaire des photodétecteurs (11) sont disposés, ladite pièce support (30) étant fixée sur le module de positionnement (10) grâce à des éléments adhésifs (20),

> **caractérisé en ce que** la pièce support (30) est d'un matériau différent de celui utilisé pour l'échelle graduée (2) et les caractéristiques physiques de la pièce support (30), des éléments adhésifs (20) et du module de positionnement (10) sont telles que le coefficient d'expansion thermique ($alpha30_e$) de la pièce support (30) est substantiellement le même que le coefficient d'expansion thermique ($alpha_2$) de l'échelle graduée (2), où lesdites caractéristiques physiques sont:

> la section transversale ($A_{10}$), la longueur ($L_{10}$), le module d'élasticité ($E_{10}$) et le coefficient d'expansion thermique ($alpha_{10}$) du module de positionnement (10),

la section longitudinale ($A_{20}$), l'épaisseur ($t$), le module de cisaillement ($G_{20}$) et le coefficient d'expansion thermique ($alpha_{20}$) des éléments adhésifs (20), et
la section transversale ($A_{30}$), la longueur ($L_{30}$), le module d'élasticité ($E_{30}$) et le coefficient d'expansion thermique ($alpha_{30}$) de la pièce support (30).

2. Dispositif de mesure optique selon la revendication 1, dans lequel les éléments adhésifs (20) sont disposés aux extrémités de la pièce support (30).

3. Dispositif de mesure selon la revendication 2, dans lequel les éléments adhésifs (20) placés à l'extrémité de la pièce support (30) qui est le plus proche du point (40) auquel le mouvement produit par le déplacement relatif est transmis au module de positionnement (10) sont des éléments adhésifs rigides.

4. Dispositif de mesure optique selon l'une quelconque des revendications précédentes, dans lequel la pièce support (30) est dotée d'un module d'élasticité élevé ($E_{30}$) et d'un coefficient d'expansion thermique ($alpha_{30}$) plus petit que le coefficient d'expansion thermique ($alpha_2$) de l'échelle graduée (2).

5. Dispositif de mesure optique selon la revendication 4, dans lequel la pièce support (30) est faite d'alumine.

6. Dispositif de mesure optique selon l'une quelconque des revendications précédentes, dans lequel la pièce support (30) comprend une première cavité dans laquelle le capteur linéaire des photodétecteurs (11) est abrité et une seconde cavité dans laquelle se trouve l'écran de détection (7).

7. Dispositif de mesure optique selon l'une quelconque des revendications 1 à 5, dans lequel la pièce support (30) est pourvue d'une cavité qui abrite le capteur linéaire des photodétecteurs (11) et l'écran de détection (7) est fermement fixé sur la pièce support (30) même.

Fig. 1

Fig. 2

Fig. 3

Fig. 4

Fig. 5

Fig. 6

Fig. 7

Fig. 8

Fig. 9

Fig. 10